(19) Europäisches Patentamt
European Patent Office
Office européen des brevets

(11) **EP 4 428 576 A1**

(12) **EUROPEAN PATENT APPLICATION**
published in accordance with Art. 153(4) EPC

(43) Date of publication:
**11.09.2024 Bulletin 2024/37**

(51) International Patent Classification (IPC):
**G01S 17/08** (2006.01)   **G01S 7/481** (2006.01)
**G01S 7/48** (2006.01)

(21) Application number: **22888844.2**

(22) Date of filing: **13.06.2022**

(86) International application number:
**PCT/CN2022/098330**

(87) International publication number:
**WO 2023/077808 (11.05.2023 Gazette 2023/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.11.2021 CN 202111302407**

(71) Applicant: **Hesai Technology Co., Ltd.
Shanghai 201821 (CN)**

(72) Inventors:
• **GAO, Yongfeng
Shanghai 201821 (CN)**
• **XIANG, Shaoqing
Shanghai 201821 (CN)**

(74) Representative: **Fish & Richardson P.C.
Highlight Business Towers
Mies-van-der-Rohe-Straße 8
80807 München (DE)**

(54) **SCANNING DEVICE FOR LASER RADAR AND CONTROL METHOD THEREFOR, AND LASER RADAR**

(57)    A scanning device for a laser radar and a control method therefor, and a laser radar. The scanning device comprises a resonance electric motor and a scanning mirror, wherein the resonance electric motor comprises a rotor and a stator, the rotor being deflected from a balance position to a preset position around a rotating axis, and the stator comprising a return assembly adapted to return the rotor to the balance position around the rotating axis; the scanning mirror is adapted to reflect a light beam for optical scanning; and the scanning mirror is connected to the resonance electric motor to implement a reciprocating swing of the scanning mirror. The scanning device can implement a higher-frequency and larger-amplitude reciprocating swing of the scanning mirror with a relatively smaller driving power, which is conducive to implementing the reciprocating swing of the scanning mirror at a certain frequency with low power consumption and a large angle, and is conducive to overcoming the problem of the laser radar scanning field being limited due to the scanning mirror having an excessively small size.

**FIG. 1**

## Description

This disclosure claims priority to Chinese Patent Application No. 202111302407.6, filed with the Chinese patent office on 4 November 2021 and titled "SCANNING APPARATUS FOR LIDAR, METHOD FOR CONTROLLING THE SAME, AND LIDAR," the content of which is incorporated herein by reference in its entirety.

## TECHNICAL FIELD

This disclosure relates to the field of LiDARs, and particularly relates to a scanning apparatus for a LiDAR, a method for controlling the same, and a LiDAR.

## BACKGROUND

A LiDAR is a commonly used ranging sensor with the characteristics of long detection range, high resolution, and less environmental interference, and is widely used in the fields, such as autonomous driving, smart robots, and unmanned aerial vehicles. In recent years, autonomous driving technology has developed rapidly, and the LiDAR, as a core sensor for distance sensing thereof, has become indispensable.

In a LiDAR, a light beam is reflected from a reflection surface of a scanning apparatus to form a light beam for scanning. A vibrating mirror is used as a kind of the scanning apparatus for the LiDAR, to achieve scanning through reciprocating motion of the reflection surface of the vibrating mirror. To obtain a higher scanning frequency, a Micro-ElectroMechanical System ("MEMS") mirror is often used as the scanning apparatus in the LiDAR.

Limited to the manufacturing process, the MEMS mirror has limited driving force, and an area of the reflection surface that can be driven is relatively small. Therefore, the scanning field of view that can be achieved by a single MEMS mirror is typically not enough to satisfy field-of-view angle requirements of the LiDAR, and arrangement of multiple MEMS mirrors puts forward very high requirements for manufacturing accuracy and assembly accuracy of the vibrating mirrors.

On the other hand, a voice coil motor is a direct drive motor that can directly convert electrical energy into mechanical energy for linear motion without a transmission apparatus of any intermediate conversion mechanism. The voice coil motor is configured to perform reciprocating motion, and is relatively simply designed. The voice coil motor is used to drive a small inertia load and perform reciprocating swing in a limited rotation angle, has the advantages such as small volume, light weight, easy installation, and high control accuracy, and is widely used in the fields such as disk driver.

However, limited to the principle and characteristics of the driver, when the reciprocating motion frequency of the scanning mirror (not less than 10 Hz) is enhanced and the reciprocating motion amplitude (scan angle greater than 20 degrees) is enhanced, the voice coil motor typically requires higher driving power, thereby affecting its application in the LiDAR.

## SUMMARY

The problem to be solved in this disclosure is to provide a scanning apparatus for a LiDAR, a method for controlling the same, and a LiDAR, to drive reciprocating swing of the scanning mirror in a large angle with low power consumption and expand the area of the scanning mirror.

To solve the problem, this disclosure provides a scanning apparatus for a LiDAR, where the scanning apparatus includes a resonant motor and a scanning mirror; the resonant motor includes a rotor and a stator, the rotor rotates from a balance position to a predetermined position around a rotation shaft; the stator includes: a restorer assembly configured to restore the rotor to the balance position around the rotation shaft; the scanning mirror is configured to reflect a light beam, to perform optical scanning; and the scanning mirror is connected to the resonant motor, to achieve reciprocating swing of the scanning mirror.

Optionally, the resonant motor includes: a magnetic ring, the magnetic ring includes multiple pairs of magnets, where the multiple pairs of magnets are arranged along a circumferential direction; and a coil pack, where the coil pack includes multiple winding coils, and the multiple winding coils are arranged along the circumferential direction of the magnetic ring.

Optionally, the multiple winding coils of the coil pack are located on an outer periphery of the magnetic ring, and are arranged surrounding the magnetic ring.

Optionally, the restorer assembly is located on a side of the coil pack away from the magnetic ring.

Optionally, the multiple winding coils of the coil pack are located on an inner periphery of the magnetic ring, and the magnetic ring surrounds the multiple winding coils.

Optionally, the restorer assembly is located on a side of the magnetic ring away from the coil pack.

Optionally, the rotor includes the magnetic ring, and the stator includes the coil pack.

Optionally, the rotor is driven by a first action to rotate from the balance position to the predetermined position around the rotation shaft, where the first action is interaction between a current transmitted in the winding coils of the coil pack and a magnetic field of the magnetic ring.

Optionally, the restorer assembly includes: at least one magnetic part; the rotor is driven at least by a second action to restore to the balance position around the rotation shaft, where the second action includes interaction between a magnetic field of the magnetic part and the magnetic field of the magnetic ring,

Optionally, a magnet corresponding to the magnetic part and the magnetic part attract each other, to keep the magnetic ring at the balance position.

Optionally, when the rotor rotates to a predetermined position, a current transmitted in the winding coils of the coil pack is cut off, and the rotor is driven by the second action to restore to the balance position.

Optionally, when the rotor rotates to a predetermined position, a current transmitted in the winding coils of the coil pack is cut off, and a reverse current is inputted into the winding coils of the coil pack, the rotor is driven jointly by a first action and the second action to restore to the balance position.

Optionally, the restorer assembly further includes: an exciting coil configured to regulate the magnetic field of the corresponding magnetic part, to cause the restorer assembly to form a predetermined effective magnetic field.

Optionally, the scanning apparatus further includes: a detector unit configured to detect the effective magnetic field of the restorer assembly, and a regulator unit configured to control the exciting coil to regulate the magnetic field of the magnetic part based on a detection result of the detector unit, to cause the restorer assembly to form the predetermined effective magnetic field

Optionally, the scanning apparatus further includes: a counterweight piece located on a side of the rotor away from the scanning mirror, to cause an overall gravity center of the rotor, the scanning mirror, and the counterweight piece to be located at the position of the rotation shaft.

Optionally, the number of the scanning mirrors is one or more, and the one or more scanning mirrors are arranged opposite to the counterweight piece.

Optionally, the number of the scanning mirrors is two; and mirror surfaces of the two scanning mirrors form a predetermined angle between them.

Correspondingly, this disclosure further provides a LiDAR, including: a light emitter apparatus configured to generate detection light; a scanning apparatus, where the scanning apparatus is the scanning apparatus of this disclosure, and the scanning apparatus reflects the detection light to a three-dimensional space and reflects echo light formed by a target in the three-dimensional space reflecting the detection light; and a light receiver apparatus configured to detect the echo light.

In addition, this disclosure further provides a method for controlling a scanning apparatus for a LiDAR, the scanning apparatus includes a resonant motor and a scanning mirror; the resonant motor includes a rotor and a stator, the rotor rotates from a balance position to a predetermined position around a rotation shaft; the stator includes: a restorer assembly configured to restore the rotor to the balance position around the rotation shaft; the scanning mirror is configured to reflect a light beam, to perform optical scanning; the scanning mirror is connected to the resonant motor, to achieve reciprocating swing of the scanning mirror; the restorer assembly includes: an exciting coil and a magnetic part, and the exciting coil surrounds a corresponding magnetic part; and the control method includes: regulating a magnetic field of the corresponding magnetic part by the exciting coil, to cause the restorer assembly to form a predetermined effective magnetic field

Optionally, before regulating the magnetic field of the corresponding magnetic part, the control method further includes: detecting the effective magnetic field of the restorer assembly; and controlling the exciting coil to regulate the magnetic field of the magnetic part based on a detection result of the detector unit when regulating the magnetic field of the corresponding magnetic part, to cause the restorer assembly to form the predetermined effective magnetic field.

Optionally, in a power-on self-test process, the effective magnetic field of the restorer assembly is detected.

Optionally, in a scanning process of the scanning apparatus, the magnetic field of the magnetic part is detected in real time.

Optionally, under a predetermined condition, the exciting coil is controlled to magnetize the magnetic part.

Compared with the existing technique, technical solutions of this disclosure have the following advantages:

in the technical solutions of this disclosure, the scanning mirror is driven by the resonant motor. Due to a stronger driving capability, the resonant motor can break through the limitation of the driving force on the area of the scanning mirror, that is, the scanning mirror has a larger area, which is beneficial to expanding the scanning field-of-view angle; and the resonant motor includes a restorer assembly that allows the rotor to restore to the balance position around the rotation shaft. The addition of the restorer assembly can achieve reciprocating swing of the scanning mirror at a higher frequency with a larger amplitude by using relatively smaller driving power, which is beneficial to achieving reciprocating swing of the scanning mirror with a large angle and low power consumption at a certain frequency, and is beneficial to overcoming the problem of limited scanning field-of-view range of the LiDAR caused by excessively small size of the scanning mirror.

In an optional solution of this disclosure, the resonant motor includes a magnetic ring and a coil pack, the rotor of the resonant motor includes the magnetic ring, and the stator of the resonant motor includes the coil pack. Fixed arrangement of the coil pack can effectively avoid repeated winding of the coil pack and effectively improve the stability of the resonant motor; and the fixed arrangement of the coil pack is also beneficial to coil heat dissipation, and can effectively improve heat dissipation problem of the scanning apparatus.

In an optional solution of this disclosure, the multiple winding coils of the coil pack are located on the outer periphery of the magnetic ring, and are arranged surrounding the magnetic ring, that is, the winding coils are arranged between the magnetic ring and the restorer assembly, which can achieve compact arrangement under a smaller load, and is beneficial to controlling the volume of the scanning apparatus. The rotor of the resonant motor includes the magnetic ring, and the stator of the resonant motor includes the coil pack. The magnetic ring that forms the rotor is provided with an inner ring. The radius of the rotor is small, which can minimize the rotational inertia of the rotor, is beneficial to reducing the demand for driving force, is beneficial to reducing the volume of other components of the resonant motor, and is beneficial to improving the compactness of the resonant motor.

In an optional solution of this disclosure, the multiple winding coils of the coil pack are located on the inner periphery of the magnetic ring, and the magnetic ring surrounds the multiple winding coils, that is, the magnetic ring is arranged between the winding coils and the restorer assembly. A smaller distance between the magnetic ring and the restorer assembly can provide a larger driving force, which is beneficial to improving the driving force of the resonant motor, and is beneficial to arrangement of a scanning mirror with a larger area.

In an optional solution of this disclosure, the scanning apparatus further includes: a counterweight piece. The counterweight piece is located on a side of the rotor away from the scanning mirror, to cause an overall gravity center of the rotor, the scanning mirror, and the counterweight piece to be located at the position of the rotation shaft. The arrangement of the counterweight piece can effectively improve the rotational stability of the scanning mirror, and is beneficial to improving the accuracy and stability of the scanning light path.

In an optional solution of this disclosure, in the scanning apparatus, the number of the scanning mirrors is multiple, and the multiple scanning mirrors are arranged at a predetermined angle. Because of being driven by the resonant motor, the scanning apparatus has a strong driving capability, can simultaneously drive multiple scanning mirrors, can simply and conveniently enable the multiple scanning mirrors to perform reciprocating motion at the same frequency and with the same amplitude, and can effectively expand the light path design space of the LiDAR.

In an optional solution of this disclosure, the scanning apparatus further includes an exciting coil. The exciting coil can, on the one hand, regulate the magnetic field of the corresponding magnetic part to eliminate the consistency difference of different magnetic parts or the magnetic field difference caused by temperature difference, and can, on the other hand, be further used to magnetize the magnetic part, thereby guaranteeing the stability of the scanning frequency and the scanning amplitude, and improving the stability of the scanning apparatus.

## BRIEF DESCRIPTION OF DRAWINGS

To more clearly describe the technical solutions of the embodiments of this disclosure or the existing technique, the drawings to be used in the description of the embodiments or the existing technique are briefly introduced below. Apparently, the drawings described below are merely some embodiments of this disclosure. For those of ordinary skills in the art, other drawings may also be obtained based on these drawings without making creative work.

FIG. 1 is a schematic diagram of a cross-sectional structure of a scanning apparatus for a LiDAR in an embodiment of this disclosure;
FIG. 2 is a schematic diagram of a cross-sectional structure of a resonant motor of the scanning apparatus shown in FIG. 1 in an embodiment;
FIG. 3 is a schematic diagram of a magnetic field region corresponding to a magnet in a magnetic ring of the resonant motor of the scanning apparatus shown in FIG. 2 in an embodiment;
FIG. 4 is a schematic structural diagram of a rotor of the resonant motor of the scanning apparatus shown in FIG. 2 when the rotor is located at a predetermined position in a first direction in an embodiment;
FIG. 5 is a schematic structural diagram of a rotor of the resonant motor of the scanning apparatus shown in FIG. 2 when the rotor is located at a predetermined position in a second direction in an embodiment;
FIG. 6 is a schematic diagram of a cross-sectional structure of a scanning apparatus for a LiDAR in another embodiment of this disclosure;
FIG. 7 is a schematic structural diagram of a resonant motor of the scanning apparatus shown in FIG. 6 in an embodiment;
FIG. 8 is a schematic diagram of a cross-sectional structure of a scanning apparatus for a LiDAR in another embodiment of this disclosure;
FIG. 9 is a schematic diagram of a light path structure of a LiDAR using a coaxial transceiver system in an embodiment of this disclosure;
FIG. 10 is a schematic diagram of a light path structure of a LiDAR using a paraxial transceiver system in an embodiment of this disclosure; and
FIG. 11 is a schematic flowchart of a method for controlling a scanning apparatus for a LiDAR in an embodiment of this disclosure.

## DETAILED DESCRIPTION

As can be known from the Background, when frequency and amplitude of a voice coil motor in the existing technique are increased, there is a problem that the driving power is too high.

The mechanical model of the voice coil motor can be simplified as a "mass-damping" second-order system, so that mechanical transfer function of the voice coil motor can be written as:

$$\frac{X(s)}{F(s)} = \frac{1}{Js^2 + cs}$$

J is rotational inertia, c is damping, s is working frequency, X is displacement, and F is driving force.

In the case of low damping (typically, the damping of motors can be minimized), the gain of the transfer function is inversely proportional to the square of the frequency, that is, as the frequency s increases, the kinematic gain X(s)IF(s) of the voice coil motor decreases rapidly. In a scanning apparatus that uses the voice coil motor to drive the scanning mirror for reciprocating motion, once the scanning frequency or scanning angle is enhanced, the demand for driving force increases significantly, and the driving power of the voice coil motor in the scanning apparatus increases substantially.

To solve the technical problem, this disclosure provides a scanning apparatus for a LiDAR, where the scanning apparatus includes a resonant motor and a scanning mirror; the resonant motor includes a rotor and a stator, the rotor rotates from a balance position to a predetermined position around a rotation shaft, the stator includes: a restorer assembly configured to restore the rotor to the balance position around the rotation shaft; the scanning mirror is configured to reflect a light beam, to perform optical scanning; and the scanning mirror is connected to the resonant motor, to achieve reciprocating swing of the scanning mirror.

In the technical solutions of this disclosure, the scanning mirror is driven by the resonant motor. Due to a stronger driving capability, the resonant motor can break through the limitation of the driving force on the area of the scanning mirror, that is, the scanning mirror has a larger area, which is beneficial to expanding the scanning field-of-view angle of the LiDAR; and the resonant motor includes a restorer assembly that restores the rotor to the balance position around the rotation shaft. The addition of the restorer assembly can achieve reciprocating swing of the scanning mirror at a higher frequency with a larger amplitude by using relatively smaller driving power, which is beneficial to achieving reciprocating swing of the scanning mirror in a large angle with low power consumption at a certain frequency, and is beneficial to overcoming the problem of limited scanning field-of-view range of the LiDAR caused by excessively small size of the scanning mirror.

To make the objects, features, and advantages of this disclosure more obvious and understandable, some embodiments of this disclosure are described in detail below with reference to the drawings.

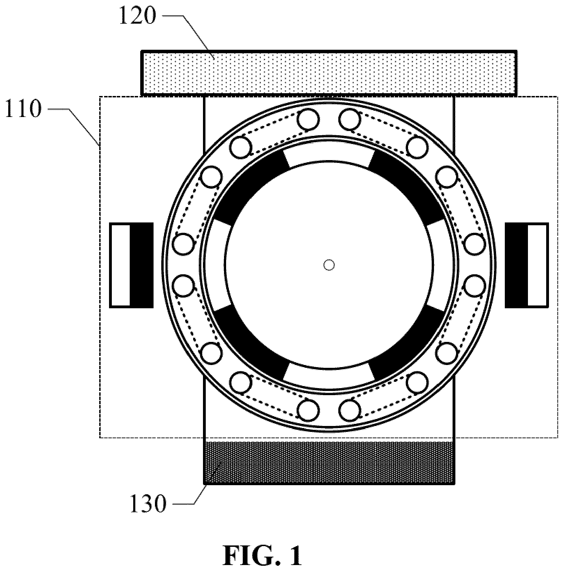

Referring to FIG. 1, a schematic diagram of a cross-sectional structure of a scanning apparatus for a LiDAR in an embodiment of this disclosure is shown.

The scanning apparatus includes: a resonant motor 110.

The resonant motor 110 is configured to provide a driving force, to drive a scanning mirror 120 that is connected to perform reciprocating motion to achieve scanning. In the resonant motor 110, a movable part is the rotor, and an immovable part is the stator.

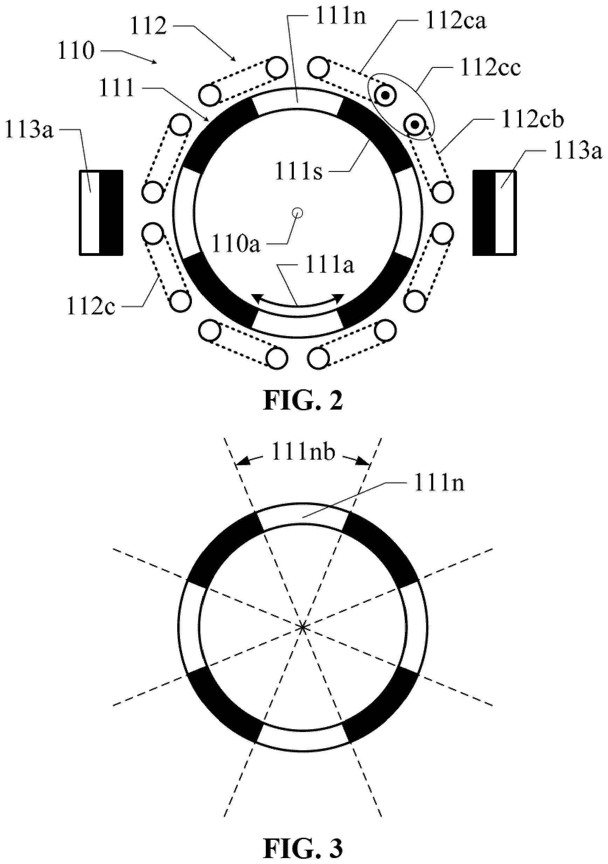

Referring to FIG. 2, a schematic diagram of a cross-sectional structure of a resonant motor of the scanning apparatus shown in FIG. 1 in an embodiment is shown.

In some embodiments of this disclosure, the resonant motor 110 includes: a magnetic ring 111. The magnetic ring 111 includes multiple pairs of magnets 111n or 111s, where the magnets 111n and 111s have opposite polarity. Preferably, the magnet 111n is magnetic north pole, and the magnet 111s is magnetic south pole. The multiple pairs of magnets 111n or 111s are arranged along a circumferential direction 111a. The resonant motor further includes a coil pack 112. The coil pack 112 includes multiple winding coils 112c, and the multiple winding coils 112c are arranged along the circumferential direction 111a of the magnetic ring.

In the embodiments as shown in FIG. 2, the resonant motor 110 is an 8-pole 8-phase motor, and the magnetic ring 111 of the resonant motor includes 4 pairs of magnets 111n or 111s. The coil pack 112 includes 8 winding coils 112c.

The magnetic ring 111 and the coil pack 112 are coaxially arranged, that is, a connection line of center points of cross sections of the magnetic ring 111 is the rotation shaft 110a. The coil pack 112 is arranged around the same rotation shaft 110a, and the distance from each of the winding coils 112c to the rotation shaft 110a is equal.

In some embodiments of this disclosure, the multiple winding coils 112c of the coil pack 112 are located on the outer periphery of the magnetic ring 111, and are arranged surrounding the magnetic ring 111. That is to say, the winding coils 112c are arranged on the outer periphery of the magnetic ring 111, which can avoid space limitations for the arrangement of the winding coils 112c, and is beneficial to optimizing the design and heat dissipation of the coil pack 112.

It should be noted that, in some embodiments of this disclosure, the rotor of the resonant motor 110 includes the magnetic ring 111, and the stator of the resonant motor 110 includes the coil pack 112, that is, the magnetic ring 111 can rotate around the rotation shaft 110a; and the position of the coil pack 112 is fixed.

Since the coil pack 112 can generate a driving force/torque after the coil pack 112 is powered on, that is to say, each of the winding coils 112c in the coil pack 112 needs to be at least connected to an external power source, the coil pack 112, as a stator, can effectively avoid repeated winding of the winding coils 112c in the coil pack 112, and is beneficial to improving the stability of the resonant motor. Moreover, the fixed arrangement is also beneficial to the heat dissipation of the winding coils 112c, and can effectively improve the heat dissipation problem of the scanning apparatus.

Moreover, the magnetic ring 111, as the rotor, is arranged inside the coil pack 112, which can effectively reduce the rotation radius of the rotor, can reduce the rotational inertia of the rotor to a large extent, is beneficial to reducing the demand for driving force, is beneficial to reducing the volume of other components in the motor, and is beneficial to improving the compactness of the motor.

The restorer assembly is configured to restore the rotor to the balance position.

The restorer assembly restores the rotor to the balance position, to achieve reciprocating motion of the rotor, thereby effectively controlling the power consumption of the resonant motor. In addition, the restorer assembly can further allow reciprocating motion frequency of the rotor to be at a resonant frequency with the largest gain, the restorer assembly can maximize the use of the driving power of the resonant motor, that is, the restorer assembly can obtain a larger scanning angle with a smaller driving power, and it is beneficial to achieving a balance between a large scanning angle and low power.

It should be noted that the balance position is a position where the stator and the rotor are located in a stable state when the resonant motor has no power supply. That is to say, when the resonant motor has no power supply, the rotor is in a stable balance state.

As shown in FIG. 2, in some embodiments of this disclosure, the restorer assembly (not shown in the figure) is located on a side of the coil pack 112 away from the magnetic ring 111. That is to say, the multiple winding coils 112c are arranged surrounding the magnetic ring 111, and the restorer assembly is located on the outer periphery of the winding coils 112c.

In some embodiments of this disclosure, the restorer assembly includes: at least one magnetic part 113a. The rotor is driven at least by a second action to restore to the balance position around the rotation shaft 110a, where the second action includes interaction between a magnetic field of the magnetic part 113a and the magnetic field of the magnetic ring 111.

In the embodiments as shown in FIG. 2, the restorer assembly includes 2 magnetic parts 113a, the 2 magnetic parts 113a are coplanar with the rotation shaft 110a, and a connection line between the 2 magnetic parts 113a is orthogonal to the rotation shaft 110a.

It should be noted that in the embodiments shown in FIG. 2, the purpose of the restorer assembly including 2 magnetic parts 113a is to facilitate the swing of the mirror. However, setting the number of magnetic parts 113a in the restorer assembly as 2 is merely an example. In other embodiments of this disclosure, the number of the magnetic parts can also be set as 1 or more, and is determined based on the magnetic field distribution.

As mentioned, in some embodiments of this disclosure, the rotor of the resonant motor includes the magnetic ring, so that the second action between the magnetic part 113a and the magnetic ring 111 is irrelevant with whether a current is transmitted in the coil pack 112.

Therefore, at the balance position, a part of the magnetic ring 111 corresponding to the magnetic part 113a and the magnetic part 113a attract each other, that is to say, a part of the magnetic ring 111 facing the magnetic part 113a and a side of the magnetic part 113a close to the magnetic ring 111 attract each other, that is, when the part of the magnetic ring 111 facing the magnetic part 111a is S pole, N pole of the magnetic part 113a is close to the magnetic ring 111; and when the part of the magnetic ring 111 facing the magnetic part 113a is N pole, S pole of the magnetic part 113a is close to the magnetic ring 111.

In some embodiments of this disclosure, the rotor is driven by a first action to rotate from the balance position to the predetermined position around the rotation shaft 100a, where the first action is interaction between a current transmitted in the winding coils of the coil pack 112 and a magnetic field of the magnetic ring 111.

When the rotor is located at the balance position, a first current is inputted into the multiple winding coils 112c of the coil pack 112. Based on the principle that a powered-on conductor is forced in a magnetic field, interaction between the first current transmitted in the winding coils 112c of the coil pack 112 and the magnetic field of the magnetic ring 111 can cause the magnetic ring 111 and the coil pack 112 to rotate relative to each other around the rotation shaft 110a.

As shown in FIG. 2, at the balance position, a part of the winding coils 112c corresponds to one magnet 111s, and the other part of the winding coils 112c extends to be corresponding to an adjacent magnet 111n.

It should be noted that the multiple pairs of magnets 111n or 111s that form the magnetic ring 111 divide the space around the magnetic ring 111 into various sector-shaped regions, each of sector-shaped regions divided corresponds to one of the magnets 111n or 111s, and each of sector-shaped regions divided is a magnetic field region of the corresponding magnet 111n or 111s. As shown in FIG. 3, the space 111nb is a magnetic field region of the magnet 111n. Therefore, a part of the winding coils 112c corresponds to one magnet 111s, and the other part of the winding coils 112c extends to be corresponding to the adjacent magnet 111n, which means that a part of the winding coils 112c is located within a magnetic field region of one magnet Ills, and the other part of the winding coils 112c extends into a magnetic field region of the adjacent magnet 111n, that is, the winding coils 112c span magnetic field regions of a pair of adjacent magnets 111n or 111s.

In some embodiments of this disclosure, the directions of the current transmitted within a part of the winding coils 112c corresponding to the same magnet 111n or Ills are the same, to ensure that the directions of the interaction between the winding coils 112 and the magnetic ring 111 are consistent Specifically, the directions of the first current transmitted within the part of the winding coils 112c corresponding to the same magnet 111n or 111s are the same.

As shown in FIG. 2, the winding coil 112ca is partially located within a magnetic field region of the magnet 111s, and the winding coil 112cb adjacent to the winding coil 112ca is also partially located in the magnetic field region of the magnet Ills. The direction of the first current transmitted in the part of the winding coil 112ca located in the magnetic field region of the magnet 111s is the same as the direction of the first current transmitted in the part of the winding coil 112cb located in the magnetic field region of the magnet Ills, for example, both are perpendicular to the paper surface outwardly (as shown in the circle 112cc in FIG. 2), so that the direction of the first current transmitted in the winding coil 112ca is opposite to the direction of the first current transmitted in the winding coil 112cb. That is to say, in the embodiments shown in FIG. 2, directions of the first current in adjacent winding coils 112c of the coil pack 112 are opposite.

Specifically, as shown in FIG. 2, when the rotor including the magnetic ring 111 is at the balance position, the first current is inputted into the multiple winding coils 112c in the coil pack 112 of the stator, to cause the rotor to rotate around the rotation shaft 110a along a first direction (e.g., counterclockwise direction).

In some embodiments of this disclosure, when the rotor rotates to the predetermined position, the current transmitted in the coil pack 111 is cut off, and the rotor is driven by the second action to restore to the balance position.

Since the rotor rotates to the predetermined position under the first action, when the current transmitted in the winding coils 112c of the coil pack 111 is cut off at the predetermined position, the first action driving the rotor to rotate also disappears accordingly, and only the second action between the magnetic part 113a and the magnetic ring 111 exists between the rotor and the stator. Therefore, the rotor is driven by the second action to rotate to the balance position, that is, restore to the balance position.

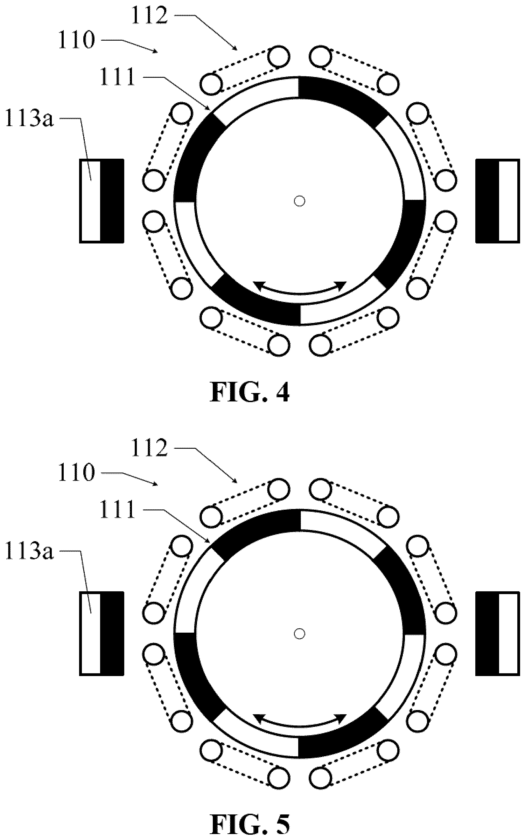

Specifically, as shown in FIG. 4, when the rotor rotates along the first direction (e.g., counterclockwise direction) to a predetermined position in the first direction, the current transmitted in the coil pack 111 is cut off, and the rotor is driven by the second action to rotate around the rotation shaft 110a along a second direction (e.g., clockwise direction) from the predetermined position in the first direction to the balance position, where the second direction is opposite to the first direction.

When the rotor restores to the balance position along the second direction, a second current is inputted into the winding coils 111c of the coil pack 111, and the transmission direction of the second current is opposite to the transmission direction of the first current. Based on the principle that a powered-on conductor is forced in a magnetic field, interaction between the second current transmitted in the winding coils 112c of the coil pack 112 and the magnetic field of the magnetic ring 111 can also cause the magnetic ring 111 and the coil pack 112 to rotate relative to each other around the rotation shaft 110a; however, because the direction of the second current is opposite to the direction of the first current, the direction of the interaction between the second current and the magnetic field of the magnetic ring 111 is opposite to the direction of the interaction between the first current and the magnetic field of the magnetic ring 111.

Specifically, as shown in FIG. 2, when the rotor including the magnetic ring 111 restores to the balance position along the second direction (e.g., clockwise direction), the second current is inputted into the multiple winding coils 112c in the coil pack 112 of the stator, so that the rotor continues to rotate to a predetermined position around the rotation shaft 110a along the second direction (e.g., clockwise direction).

It should be noted that, in some embodiments of this disclosure, the directions of the current transmitted in a part of the winding coils 112c corresponding to the same magnet 111n or 111s are the same, to ensure that the directions of interaction between the winding coils 112 and the magnetic ring 111 are the same. Therefore, similar to the first current, the directions of the second current transmitted in the part of the winding coils 112c corresponding to the same magnet 111n or 111s are the same.

Specifically, as shown in FIG. 2, the direction of the second current transmitted in the winding coil 112ca is opposite to the direction of the second current transmitted in the winding coil 112cb. That is to say, in the embodiments shown in FIG. 2, directions of the second current in the adjacent winding coils 112c of the coil pack 112 are opposite.

As shown in FIG. 5, when the rotor rotates along the second direction to the predetermined position in the second direction, the current transmitted in the coil pack 111 is cut off again, and the rotor is driven by the second action to restore to the balance position again.

Thus, it can be seen that the rotor of the resonant motor performs reciprocating motion back and forth among the balance position, the predetermined position in the first direction, and the predetermined position in the second direction. Therefore, a mechanical model of the resonant motor can be approximated as a spring element in a certain range. For a spring element, potential energy formed during deviation from the balance position is converted into strain capacity of the elastic material; and for the mentioned resonant motor, potential energy formed during deviation from the balance position is stored in the magnetic ring 111 and the magnetic part 113a. Therefore, the mechanical model of the mentioned resonant motor can be approximately understood as a simple harmonic motion system.

Specifically, for the resonant motor, stiffness coefficient k of the reciprocating motion of the rotor can be expressed as: $K=J*(2\pi f_0)^2$ or $K=m*(2\pi f_0)^2$, wherein $f_0$ represents working frequency of the resonant motor, J represents rotational inertia of the load, and m represents mass of the load.

It should be noted that the stiffness coefficient K is used to characterize the magnitude of a force applied for producing unit displacement of the load. Therefore, the smaller the stiffness coefficient is, the smaller the driving force is applied, that is, the more easily it can be driven, to reduce energy consumption; and the larger the stiffness coefficient is, the larger the driving force is generated, and the larger mass the load that can be driven.

In addition, there is interaction between the magnetic field of each magnetic part 113a and the magnetic field of the magnetic ring 111. That is to say, a simple harmonic motion system can be formed between each magnetic part 113a and the magnetic ring 111. In the embodiments as shown in FIG. 2, the restorer assembly includes 2 magnetic parts 113a, which are located on both sides of the magnetic ring 111 respectively, that is, the magnetic ring 111 is located between the two magnetic parts 113a.

Therefore, in the embodiments as shown in FIGS. 1 to 5, the simple harmonic motion system between the rotor and the stator of the resonant motor is equivalent to the combined action of a single simple harmonic motion system between each magnetic part 113a and the magnetic ring 111. That is to say, the stiffness coefficient of the simple harmonic motion system between the rotor and the stator of the resonant motor is the sum of actions between all of the magnetic parts 113a in the restorer assembly and the magnetic ring 111. Specifically, the stiffness coefficient of the simple harmonic motion system between the rotor and the stator of the resonant motor is expressed as: $K=n*k_0(x,s(magnet))$, wherein n represents the number of simple harmonic motion systems, to represents a stiffness function of a single simple harmonic motion system, x represents a gap inside the simple harmonic motion system, and s represents a geometric parameter of the simple harmonic motion system.

As can be seen from the stiffness coefficient of the simple harmonic motion system between the rotor and the stator of the resonant motor, the magnitude of the stiffness coefficient of the simple harmonic motion system between the rotor and the stator of the resonant motor can be regulated by determining the number of the magnetic parts. Specifically, the stiffness coefficient K of the simple harmonic motion system between the rotor and the stator of the resonant motor can be increased by increasing the number of the magnetic parts.

It should be noted that the gap inside the simple harmonic motion system refers to a gap between two magnets in the simple harmonic motion system. In the embodiments as shown in FIGS. 1 to 5, the gap inside the simple harmonic motion system is the distance between the magnetic part 113a and the magnetic ring 111.

In addition, when rotating to the predetermined position in the first direction or the second direction, the magnet 111n or Ills corresponding to at least a part of the winding coils 112c remains unchanged, thereby guaranteeing that the rotor oscillates near the balance position. The predetermined position is associated with spatial frequency of the magnetic ring 111. That is to say, the stroke of the rotor is associated with the spatial frequency of the magnetic ring 111. The maximum stroke of the rotor can be regulated by changing the number of pairs of the magnets in the magnetic ring 111.

Specifically, in the embodiments as shown in FIGS. 1 to 5, the magnetic ring 111 includes n pairs of magnets 111s and 111n, and the predetermined position is a position where the rotor rotates by an angle α from the balance position, wherein $\alpha \leq 360/(2n*2)$. In the embodiments as shown in FIG. 2, the magnetic ring 111 includes 4 pairs of magnets 111s and 111n, and the angle between the predetermined position and the balance position is 22.5°.

It should be noted that the spatial frequency of the magnetic ring 111 can only affect the maximum stroke of the rotor, that is, a possible position of the predetermined position. In an actual working process, the stroke of the rotor is not only limited by the spatial frequency of the magnetic ring 111, but also affected by power-on time of the winding coils 112c in the coil pack 112.

Further referring to FIG. 1, the scanning apparatus further includes: a scanning mirror 120.

The scanning mirror 120 is configured to reflect a light beam, to perform optical scanning; and the scanning mirror 120 is connected to the resonant motor 110 to achieve the reciprocating swing of the scanning mirror.

As mentioned, the rotor of the resonant motor performs reciprocating motion back and forth among the balance position, the predetermined position in the first direction, and the predetermined position in the second direction. The scanning mirror 120 is connected to the rotor of the resonant motor, and can perform reciprocating swing along with the rotor, to change the propagation direction of the reflected light beam, and achieve scanning.

When the rotor rotates to a position, a detection beam reflected from the scanning mirror corresponds to a spatial field-of-view angle for detection. The predetermined positions in the first direction and the second direction respectively correspond to a maximum field-of-view angle in a horizontal field of view of the LiDAR. For example, the predetermined position in the first direction corresponds to a +60-degree field-of-view angle, the second direction corresponds to a -60-degree field-of-view angle, and the balance position corresponds to a 0-degree field-of-view angle. Through the reciprocating motion of the rotor back and forth among the balance position, the predetermined position in the first direction, and the predetermined position in the second direction, the reciprocating swing of the scanning mirror is achieved, and the LiDAR detects in a space of the field-of-view range, wherein the detection beam can be generated by lasers arranged in a one-dimensional linear array or lasers arranged in a two-dimensional area array, and the one-dimensional linear array can be arranged in the vertical direction. In addition, the scanning apparatus can also scan the vertical field of view.

As shown in FIG. 1, in some embodiments of this disclosure, the scanning apparatus further includes: a counterweight piece 130. The counterweight piece 130 is located on a side of the rotor away from the scanning mirror 120, to cause an overall gravity center of the rotor, the scanning mirror 120, and the counterweight piece 130 to be located at the position of the rotation shaft. Through the arrangement of the counterweight piece, the overall gravity center of the rotor, the scanning mirror 120, and the counterweight piece 130 is located at the position of the rotation shaft, to cause the overall mass center of the moving parts of the scanning apparatus to be at the rotation center, which can effectively improve the rotational stability of the scanning apparatus, and effectively ensure the light beam scanning stability of the scanning mirror. Specifically, in the embodiments as shown in FIG. 1, the counterweight piece 130 is arranged opposite to the scanning mirror 120, to regulate the overall mass center position.

It should be noted that, in the embodiments shown in FIGS. 1 to 5, the winding coils 112c are arranged on the outer periphery of the magnetic ring 111. When the rotor rotates to the predetermined position, the current transmitted in the coil pack 111 is cut off, and the rotor is driven merely by the second action to restore to the balance position. However, this arrangement is merely an example. In other embodiments of this disclosure, when the winding coils are arranged on the outer periphery of the magnetic ring, and the rotor rotates to the predetermined position, the current transmitted in the winding coils of the coil pack can also be cut off, and a reverse current can be inputted into the winding coils of the coil pack, to cause the rotor to be driven jointly by the first action and the second action to restore to the balance position.

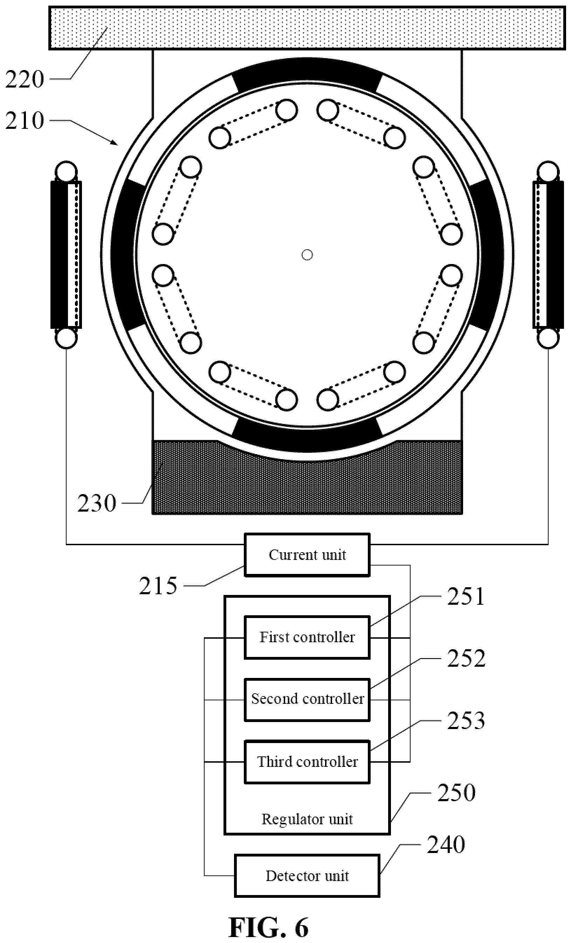

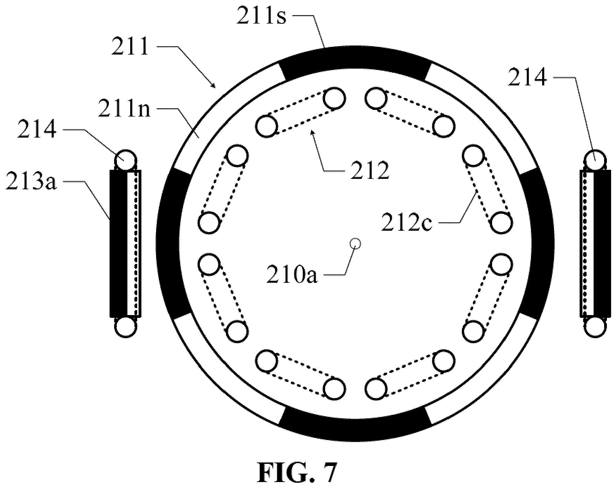

Referring to FIGS. 6 and 7, FIG. 6 shows a schematic diagram of a cross-sectional structure of a scanning apparatus for a LiDAR in another embodiment of this disclosure; and FIG. 7 is a schematic structural diagram of a resonant motor of the scanning apparatus of embodiments shown in FIG. 6.

The scanning apparatus includes: a resonant motor 210, and a scanning mirror 220 and a counterweight piece 230 connected to the rotor of the resonant motor 210. The similarities to the mentioned embodiments are not repeated here in this disclosure. The difference from the mentioned embodiments is that, as shown in FIG. 7, in some embodiments of this disclosure, the multiple winding coils 212c of the coil pack 212 are located on the inner periphery of the magnetic ring 211, and the magnetic ring 211 surrounds the multiple winding coils 212c, that is to say, the multiple winding coils 212c in the coil pack 212 are located inside the magnetic ring 211, and are arranged along the circumferential direction of the magnetic ring 211.

In addition, as shown in FIG. 7, in some embodiments of this disclosure, the restorer assembly is located on a side of the magnetic ring 211 away from the coil pack 212. As mentioned, the mechanical model of the resonant motor can be approximately understood as a simple harmonic motion system. The stiffness coefficient of a single simple harmonic motion system is associated with a gap inside the simple harmonic motion system, that is, a distance between the magnetic part 213a and the magnetic ring 211.

The winding coils 212c are located inside the magnetic ring 211, and the magnetic part 213a is located on an outer side of the magnetic ring 211. This arrangement can minimize the distance between the magnetic part 213a and the magnetic ring 211. The increase of the stiffness coefficient of the simple harmonic motion system is beneficial to increase of the load mass and rotational inertia of the load, thereby driving a large-sized scanning mirror without increasing energy consumption, or effectively reducing energy consumption in the case of driving a scanning mirror of the same size.

As described in the mentioned embodiments, when the rotor is at the balance position, the first current is inputted into the multiple winding coils 212c of the coil pack 212, and the rotor is driven by the first action to rotate from the balance position to the predetermined position in the first direction around the rotation shaft along the first direction (e.g., counterclockwise direction).

In some embodiments of this disclosure, when the rotor rotates to the predetermined position, the current transmitted in the winding coils 212c of the coil pack 212 is cut off, and a reverse current is inputted into the winding coils 212c of the coil pack 212, to cause the rotor to be driven jointly by the first action and the second action to restore to the balance position.

Specifically, in the embodiments as shown in FIGS. 6 and 7, when the rotor rotates along the first direction to the predetermined position in the first direction, the first current transmitted in the coil pack 211 is cut off, and the second current is inputted into the winding coils 212c of the coil pack 211, where the direction of the second current is opposite to the direction of the first current.

Based on the principle that a powered-on conductor is forced in a magnetic field, interaction between the second current transmitted in the winding coils 212c of the coil pack 212 and the magnetic field of the magnetic ring 211 can also cause the magnetic ring 211 and the coil pack 212 to rotate relative to each other around the rotation shaft; however, because the direction of the second current is opposite to the direction of the first current, the direction of the first action between the second current and the magnetic field of the magnetic ring 211 is opposite to the direction of the first action between the first current and the magnetic field of the magnetic ring 211, the direction of the first action is a direction of rotating the rotor to the balance position, that is to say, the direction of the first action between the second current and the magnetic field of the magnetic ring 211 is the same as the direction of the second action between the magnetic field of the magnetic part 213a and the magnetic field of the magnetic ring 211 at the predetermined position in the first direction.

Specifically, in the embodiments as shown in FIGS. 6 and 7, when the rotor rotates along the first direction to the predetermined position in the first direction, the first current is cut off, and the second current is inputted, the rotor is driven jointly by the first action between the second current and the magnetic field of the magnetic ring 211 and the second action between the magnetic field of the magnetic part 213a and the magnetic field of the magnetic ring 211 to rotate from the predetermined position in the first direction to the balance position around the rotation shaft along the second direction (e.g., clockwise direction), wherein the second direction is opposite to the first direction.

When the rotor restores to the balance position along the second direction, a third current is inputted into the winding coils 211c of the coil pack 211, and the transmission direction of the third current is the same as the transmission direction of the second current, that is, opposite to the transmission direction of the first current Therefore, the direction of the first action between the third current and the magnetic field of the magnetic ring 111 is the same as the direction of the first action between the second current and the magnetic field of the magnetic ring 111.

Specifically, in the embodiments as shown in FIGS. 6 and 7, when the rotor restores to the balance position along the second direction, the third current is inputted into the multiple winding coils 212c of the coil pack 212, to cause the rotor to continue to rotate to the predetermined position in the second direction around the rotation shaft along the second direction (e.g., clockwise direction).

When the rotor rotates along the second direction to the predetermined position in the second direction, the third current transmitted in the coil pack 111 is cut off, and a fourth current is inputted into the winding coils 212c of the coil pack 212, the direction of the fourth current is opposite to the direction of the third current

Since the direction of the fourth current is opposite to the direction of the third current, the direction of the first action between the fourth current and the magnetic field of the magnetic ring 211 is opposite to the direction of the first action between the third current and the magnetic field of the magnetic ring 211, that is to say, the direction of the first action between the fourth current and the magnetic field of the magnetic ring 211 is the same as the direction of the second action between the magnetic field of the magnetic part 213a and the magnetic field of the magnetic ring 211 at the predetermined position in the second direction.

Specifically, in the embodiments as shown in FIGS. 6 and 7, when the rotor rotates along the second direction to the predetermined position in the second direction, the third current is cut off, and the fourth current is inputted, the rotor is driven jointly by the first action between the fourth current and the magnetic field of the magnetic ring 211 and the second action between the magnetic field of the magnetic part 213a and the magnetic field of the magnetic ring 211 to restore from the predetermined position in the second direction to the balance position around the rotation shaft along the first direction (e.g., clockwise direction).

Thus, it can be seen that the restoration of the rotor of the resonant motor from the predetermined position to the balance position is not only driven by the second action, but also driven by the first action. As mentioned, the mechanical model of the resonant motor can be approximately understood as a simple harmonic motion system.

When the restoration of the rotor of the resonant motor is driven jointly by the first action and the second action, the mechanical model of the resonant motor can be regarded as having two types of simple harmonic motion systems-a first type of simple harmonic motion system formed the magnetic part 213a and the magnetic rings 211, and a second type of simple harmonic motion system formed by different directions of current transmitted in the multiple winding coils 212c of the coil pack 212 and the magnetic ring 211.

When the mechanical model of the resonant motor is regarded as two types of simple harmonic motion systems, the mechanical model of the resonant motor can be approximately considered as a second-order resonant system. The two types of simple harmonic motion systems have a resonance phenomenon at a resonance frequency point, which can produce an extremely large gain, and can produce an extremely large motion displacement with an extremely small driving force, thereby achieving low-power large-angle driving.

The frequency corresponding to occurrence of the resonance phenomenon and generation of the maximum gain is the resonance frequency point As mentioned, the stiffness coefficient K of the simple harmonic motion system between the stator and the rotor is associated with the working frequency $f_0$ of the resonant motor, and the stiffness coefficient ko of a single simple harmonic motion system is affected by the magnetic field and positional relationship of the magnetic part 213a and the magnetic ring 211. Therefore, the components, such as the resonant motor, the scanning mirror, and the counterweight piece, can be reasonably arranged, to cause the working frequency of the resonant motor to be the shown resonant frequency point, to achieve gain maximization.

In addition, what is different from the mentioned embodiments is that, in some embodiments of this disclosure, the restorer assembly further includes: an exciting coil 214, where the exciting coil 214 is configured to regulate the magnetic field of the corresponding magnetic part 213a, to cause the restorer assembly to form a predetermined effective magnetic field

The exciting coil 214 can, on the one hand, regulate the magnetic field of the corresponding magnetic part 213a to eliminate the consistency difference of different magnetic parts 213a or the magnetic field difference caused by temperature difference, and can, on the other hand, be further used to magnetize the magnetic part 213a, thereby guaranteeing the stability of the scanning frequency and the scanning amplitude, and improving the stability of the scanning apparatus.

In the embodiments as shown in FIGS. 6 and 7, the exciting coil 214 surrounds the corresponding magnetic part 213a with a connection line between the magnetic ring 211 and the magnetic part 213a as the shaft. The exciting coil 214 corresponding to the magnetic part 213a means that the number of the exciting coils 214 is equal to the number of the magnetic parts 213a and there is one-to-one correspondence therebetween.

In some embodiments of this disclosure, the resonator unit further includes: a current unit 215, where the current unit 215 is configured to input a current into the exciting coil 214, to cause the restorer assembly to form the predetermined effective magnetic field. Specifically, in the embodiments as shown in FIGS. 6 and 7, after a current is inputted into the exciting coil 214, the magnetic field formed by the current transmitted in the exciting coil 214 is superimposed on the magnetic field of the corresponding magnetic part 213a, to form the effective magnetic field of the restorer assembly.

Due to production consistency problem, there can be magnetic field strength difference between different magnets. Therefore, there can be magnetic field strength difference between different magnetic parts in the same scanning apparatus or between magnetic parts in different scanning apparatuses, and the magnetic field strength difference can affect the stiffness coefficient of the simple harmonic motion system, and then affect the scanning frequency and the scanning amplitude of the scanning apparatus. Therefore, the magnetic field formed by the current transmitted in the exciting coil 214 can be regulated by regulating the current transmitted in the exciting coil 214, to eliminate the stiffness coefficient difference of the simple harmonic motion system caused by the consistency difference, to cause the effective magnetic field formed after superposition to remain stable, thereby ensuring the stability of the stiffness coefficient of the simple harmonic motion system, that is, ensuring that the stiffness coefficient of the simple harmonic motion system is a determined value.

Additionally, the magnet has temperature effects. Typically, as the temperature increases, the magnetism of the magnet decreases. Therefore, the magnetic field of the same magnet can also change at different temperatures. Therefore, during temperature change, the magnetic field formed by the current transmitted in the exciting coil 214 can be regulated by regulating the current transmitted in the exciting coil 214, to eliminate the stiffness coefficient difference of the simple harmonic motion system caused by the temperature change, to cause the effective magnetic field formed after superposition to remain stable, thereby ensuring the stability of the stiffness coefficient of the simple harmonic motion system

In addition, the magnet further has time effects, that is, the magnetism of the magnet can attenuate during the life cycle of the magnet. Therefore, the use time increases, the stiffness coefficient of the simple harmonic motion system can also attenuate. Therefore, the exciting coil 214 can be used to magnetize the magnetic part 213a at an appropriate time node during the life cycle of the magnet, to restore the magnetism of the magnetic part 213a, and achieve the purpose of restoring the stiffness coefficient of the simple harmonic motion system

Further referring to FIG. 6, in some embodiments of this disclosure, the scanning apparatus further includes: a detector unit 240, where the detector unit 240 is configured to detect the effective magnetic field of the restorer assembly; and a regulator unit 250 configured to control the exciting coil to regulate the magnetic field of the magnetic part based on a detection result of the detector unit 240, to cause the restorer assembly to form the predetermined effective magnetic field.

Specifically, in some embodiments of this disclosure, in a power-on self-test process, the detector unit 240 detects the effective magnetic field of the restorer assembly; the regulator unit 250 includes: a first controller 251, the first controller 251 is configured to control the exciting coil to form a regulating magnetic field based on the detection result of the detector unit 240 in the power-on self-test process, and the regulating magnetic field cooperates with the magnetic field of the corresponding magnetic part to form the predetermined effective magnetic field.

In addition, in some embodiments of this disclosure, the detector unit 240 detects the magnetic field of the magnetic part in real time; the regulator unit 250 includes: a second controller 252, the second controller 252 is configured to control the exciting coil to form a real-time regulating magnetic field based on a real-time detection result of the detector unit 240, and the real-time regulating magnetic field cooperates with the magnetic field of the corresponding magnetic part to form the predetermined effective magnetic field.

In addition, in some embodiments of this disclosure, the regulator unit 250 further includes: a third controller 253. Under a predetermined condition, the third controller 253 is configured to control the exciting coil to magnetize the magnetic part. The predetermined condition includes at least one of a time condition and a magnetic field condition. The time condition means that the use time satisfies a predetermined time length, and the magnetic field condition means that the detector unit 240 detects the effective magnetic field of the shown restorer assembly being lower than a predetermined value.

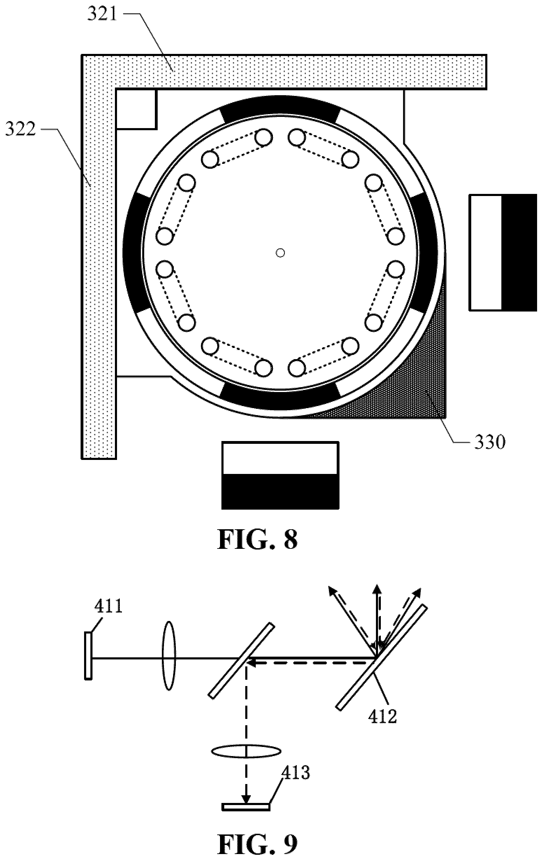

Referring to FIG. 8, a schematic diagram of a cross-sectional structure of a scanning apparatus for a LiDAR in another embodiment of this disclosure is shown.

The similarities to the mentioned embodiments are not repeated here in this disclosure. The difference from the mentioned embodiments is that, in some embodiments of this disclosure, the number of the scanning mirrors is one or more, and the one or more scanning mirrors are arranged opposite to the counterweight piece.

Because the resonant motor can achieve the reciprocating swing of the scanning mirror at a higher motion frequency, with a larger motion amplitude, and with a smaller driving power, that is to say, the driving motor can obtain a greater driving capability with a smaller driving power, so that the arrangement of the resonant motor can provide possibility for arranging multiple scanning mirrors or a larger-sized scanning mirror, which can effectively expand the scanning field of view.

Specifically, in the embodiments as shown in FIG. 8, the number of the scanning mirrors is 2, namely scanning mirror 321 and scanning mirror 322. The 2 scanning mirrors are located on a side of the rotation shaft, and the counterweight piece 330 is located on the other side of the rotation shaft, to regulate the overall gravity center position of the rotor, the scanning mirror, and the counterweight piece.

In addition, in some embodiments of this disclosure, when the number of the scanning mirrors is multiple, there is a predetermined angle among mirror surfaces of the multiple scanning mirrors. Specifically, in the embodiments as shown in FIG. 8, the number of the scanning mirrors is two, namely, the scanning mirror 321 and the scanning mirror 322. The mirror surfaces of the scanning mirror 321 and the scanning mirror 322 form a predetermined angle between them, such as 90°.

It should be noted that, in some embodiments of this disclosure, the LiDAR using the scanning apparatus has two sets of transceiver systems, where the two sets of transceiver systems can be used as coaxial transceiver systems or paraxial transceiver systems. The two sets of transceiver systems respectively correspond to mirror surfaces of different scanning mirrors, that is, light beams emitted and received by one set of transceiver system are reflected by the scanning mirror 321, and light beams emitted and received by the other set of transceiver system are reflected by the scanning mirror 322, to achieve the purpose of expanding the field of view. In the paraxial transceiver system, the light emitter apparatus and the light receiver apparatus are arranged in a direction perpendicular to a horizontal plane.

In some other embodiments of this disclosure, the LiDAR using the scanning apparatus only has one set of transceiver system, and the transceiver system is a paraxial transceiver system. The transceiver system respectively transmits and receives light beams by the 2 scanning mirrors respectively. That is, light beams generated by the light emitter apparatus in the transceiver system are reflected by one of the scanning mirror 321 and the scanning mirror 322 to achieve light beam emission, and light beams received by the light receiver apparatus in the transceiver system are reflected by the other one of the scanning mirror 321 and the scanning mirror 322 to achieve light beam reception.

Since the 2 scanning mirrors are connected to the same resonant motor, the scanning frequency and the scanning amplitude of the 2 scanning mirrors are strictly consistent, which can effectively avoid light path deviation caused by process consistency problem, effectively ensure the light beam scanning stability, and effectively reduce the assembly process difficulty.

Correspondingly, this disclosure further provides a LiDAR, Specifically including: a light emitter apparatus 411 configured to generate detection light; a scanning apparatus 412, wherein the scanning apparatus is the scanning apparatus of this disclosure, and the scanning apparatus reflects the detection light to a three-dimensional space and reflects echo light formed by a target in the three-dimensional space reflecting the detection light; and a light receiver apparatus 413 configured to detect the echo light

The scanning apparatus 412 is the scanning apparatus of this disclosure. The disclosure of the scanning apparatus in the mentioned embodiments may be referred to for specific technical solutions of the scanning apparatus, which are not recited here in this disclosure.

The scanning apparatus can achieve reciprocating swing of the scanning mirror at a higher frequency with a larger amplitude by using relatively smaller driving power, which is beneficial to achieving reciprocating swing of the scanning mirror in a large angle with low power consumption at a certain frequency, and is beneficial to overcoming the problem of limited scanning field-of-view range of the LiDAR caused by excessively small size of the scanning mirror.

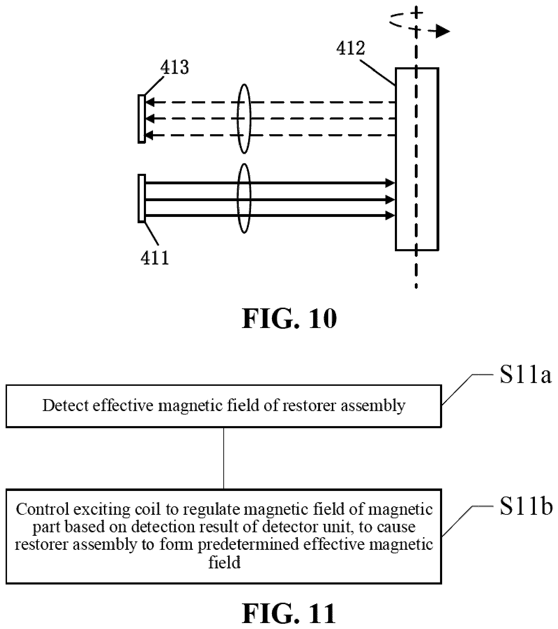

In some embodiments of this disclosure, the LiDAR can be a LiDAR using a coaxial transceiver system (as shown in FIG. 9). However, in some other embodiments of this disclosure, the LiDAR can also be a LiDAR using a paraxial transceiver system (as shown in FIG. 10). As shown in FIG. 10, in the LiDAR using a paraxial transceiver system, the light emitter apparatus and the light receiver apparatus can be arranged in a direction perpendicular to a horizontal plane, to cause the emitted light beams and the received light beams to be reflected by the same scanning mirror.

In addition, this disclosure further provides a method for controlling a scanning apparatus for a LiDAR.

Referring to FIGS. 6, 7, and 11, FIG. 6 shows a schematic diagram of a cross-sectional structure of a scanning apparatus for a LiDAR used for the control method; FIG. 7 shows a schematic diagram of a cross-sectional structure of a resonant motor in the scanning apparatus for a LiDAR shown in FIG. 6; and FIG. 11 is a schematic flow chart of a method for controlling a scanning apparatus for a LiDAR in an embodiment of this disclosure.

The scanning apparatus includes a resonant motor 210 and a scanning mirror 220; where the resonant motor 210 includes a rotor and a stator, the rotor rotates from a balance position to a predetermined position around a rotation shaft; the stator includes: a restorer assembly configured to restore the rotor to the balance position around the rotation shaft, the scanning mirror 220 is configured to reflect a light beam, to perform optical scanning; the scanning mirror 220 is connected to the resonant motor, to achieve reciprocating swing of the scanning mirror 220; the restorer assembly includes: an exciting coil 214 and a magnetic part 213a, and the exciting coil 214 surrounds a corresponding magnetic part 213a.

The control method includes: regulating a magnetic field of the corresponding magnetic part 213a through the exciting coil 214, to cause the restorer assembly to form a predetermined effective magnetic field.

The exciting coil 214 is used to regulate the magnetic field of the corresponding magnetic part 213a to form the effective magnetic field, which can, on the one hand, regulate the magnetic field of the corresponding magnetic part 213a, to eliminate the consistency difference of different magnetic parts 213a or the magnetic field difference caused by temperature difference, and can, on the other hand, be further used to magnetize the magnetic part 213a, thereby guaranteeing the stability of the scanning frequency and the scanning amplitude, and improving the stability of the scanning apparatus.

As shown in FIG. 11, in some embodiments of this disclosure, before regulating the magnetic field of the corresponding magnetic part, the control method further includes: executing step S11a: detecting the effective magnetic field of the restorer assembly; and executing step S11b: controlling the exciting coil to regulate the magnetic field of the magnetic part based on a detection result of the detector unit when regulating the magnetic field of the corresponding magnetic part, to cause the restorer assembly to form the predetermined effective magnetic field.

The detector unit detects the effective magnetic field of the restorer assembly, and regulates the magnetic field formed by the exciting coil based on the detection result, thereby improving the regulation accuracy, and improving the stability of the ultimately formed effective magnetic field

As for the magnetic field strength difference caused by production consistency problem, because it is caused by production, the magnetic field strength difference caused by the production consistency problem is constant for each magnetic part, and details of the magnetic field strength difference caused by the production consistency problem can be known only after one detection. Therefore, in some embodiments of this disclosure, in the power-on self-test process, the effective magnetic field of the restorer assembly is detected.

As for the magnetic field strength difference caused by temperature change, because the temperature can change with the use of the LiDAR, the magnetic field strength difference caused by the temperature change can change with the temperature change for each magnetic part, that is, details of the magnetic field strength difference caused by the temperature change can change in real time. Therefore, in some embodiments of this disclosure, in a scanning process of the scanning apparatus, the magnetic field of the magnetic part is detected in real time.

In addition, the magnet further has time effects, that is, the magnetism of the magnet can attenuate during the life cycle of the magnet. Therefore, the use time increases, the stiffness coefficient of the simple harmonic motion system can also attenuate. Therefore, the exciting coil 214 can be used to magnetize the magnetic part 213a at an appropriate time node during the life cycle of the magnet, to restore the magnetism of the magnetic part 213a, and achieve the purpose of restoring the stiffness coefficient of the simple harmonic motion system.

Specifically, in some embodiments of this disclosure, under a predetermined condition, the exciting coil is controlled to magnetize the magnetic part. The predetermined condition includes at least one of a time condition and a magnetic field condition. The time condition means that the use time satisfies a predetermined time length, and the magnetic field condition means that the effective magnetic field of the shown restorer assembly is detected to be lower than a predetermined value.

To sum up, in the technical solutions of this disclosure, the scanning mirror is driven by the resonant motor. Due to a stronger driving capability, the resonant motor can break through the limitation of the driving force on the area of the scanning mirror, that is, the scanning mirror has a larger area, which is beneficial to expanding the scanning field-of-view angle; and the resonant motor includes a restorer assembly that restores the rotor to the balance position around the rotation shaft. With the addition of the restorer assembly, the scanning apparatus can achieve reciprocating swing of the scanning mirror at a higher frequency with a larger amplitude by using relatively smaller driving power, which is beneficial to achieving reciprocating swing of the scanning mirror in a large angle with low power consumption at a certain frequency, and is beneficial to overcoming the problem of limited scanning field-of-view range of the Lidar caused by excessively small size of the scanning mirror.

Further, in an optional solution of this disclosure, the resonant motor includes a magnetic ring and a coil pack, the rotor of the resonant motor includes the magnetic ring, and the stator of the resonant motor includes the coil pack. Fixed arrangement of the coil pack can effectively avoid repeated winding of the coil pack and effectively improve the stability of the resonant motor; and the fixed arrangement of the coil pack is also beneficial to heat dissipation of the coil, and can effectively improve heat dissipation problem of the scanning apparatus.

In addition, in an optional solution of this disclosure, the multiple winding coils of the coil pack are located on the outer periphery of the magnetic ring, and are arranged surrounding the magnetic ring, that is, the winding coils are arranged between the magnetic ring and the restorer assembly, which can achieve compact arrangement under a smaller load, and is beneficial to controlling the volume of the scanning apparatus. The rotor of the resonant motor includes the magnetic ring, and the stator of the resonant motor includes the coil pack. The magnetic ring that forms the rotor is provided with an inner ring, and the rotor has a small radius, which can minimize the rotational inertia of the rotor, is beneficial to reducing the demand for driving force, is beneficial to reducing the volume of other components of the resonant motor, and is beneficial to improving the compactness of the device.

In addition, in an optional solution of this disclosure, the multiple winding coils of the coil pack are located on the inner periphery of the magnetic ring, and the magnetic ring surrounds the multiple winding coils, that is, the magnetic ring is arranged between the winding coils and the restorer assembly. A smaller distance between the magnetic ring and the restorer assembly can provide a larger driving force, which is beneficial to improving the driving force of the resonant motor, and is beneficial to arrangement of a scanning mirror with a larger area.

Further, in an optional solution of this disclosure, the scanning apparatus further includes: a counterweight piece. The counterweight piece is located on a side of the rotor away from the scanning mirror, to cause an overall gravity center of the rotor, the scanning mirror, and the counterweight piece to be located at the position of the rotation shaft. The arrangement of the counterweight piece can effectively improve the rotational stability of the scanning mirror, and is beneficial to improving the accuracy and stability of the scanning light path.

Still further, in an optional solution of this disclosure, in the scanning apparatus, the number of the scanning mirrors is multiple, and the multiple scanning mirrors are arranged at a predetermined angle. Because of being driven by the resonant motor, the scanning apparatus has a strong driving capability, which can simultaneously drive multiple scanning mirrors, can simply and conveniently enable the multiple scanning mirrors to perform reciprocating motion at the same frequency and with the same amplitude, and can effectively expand the light path design space of the LiDAR.

Further, in an optional solution of this disclosure, the scanning apparatus further includes an exciting coil. The exciting coil can, on the one hand, regulate the magnetic field of the corresponding magnetic part to eliminate the consistency difference of different magnetic parts or the magnetic field difference caused by temperature difference, and can, on the other hand, be further used to magnetize the magnetic part, thereby guaranteeing the stability of the scanning frequency and the scanning amplitude, and improving the stability of the scanning apparatus.

Although this disclosure is disclosed as above, this disclosure is not limited to the above. Any person skilled in the art may make various changes and modifications without departing from the spirit and scope of this disclosure, and therefore the scope of protection of this disclosure shall be subject to the scope limited by the claims.

## Claims

1. A scanning apparatus for a LiDAR, comprising a resonant motor and a scanning mirror; wherein

   the resonant motor comprises a rotor and a stator;
   the rotor rotates from a balance position to a predetermined position around a rotation shaft;
   the stator comprises: a restorer assembly configured to restore the rotor to the balance position around the rotation shaft;
   the scanning mirror is configured to reflect a light beam, to perform optical scanning; and
   the scanning mirror is connected to the resonant motor, to achieve reciprocating swing of the scanning mirror.

2. The scanning apparatus of claim 1, wherein the resonant motor comprises: a magnetic ring, the magnetic ring comprising a plurality of pairs of magnets, wherein the plurality of pairs of magnets are arranged along a circumferential direction; and a coil pack, wherein the coil pack comprises a plurality of winding coils, and the plurality of winding coils are arranged along the circumferential direction of the magnetic ring.

3. The scanning apparatus of claim 2, wherein the plurality of winding coils of the coil pack are located on an outer periphery of the magnetic ring, and are arranged surrounding the magnetic ring.

4. The scanning apparatus of claim 3, wherein the restorer assembly is located on a side of the coil pack away from the magnetic ring.

5. The scanning apparatus of claim 2, wherein the plurality of winding coils of the coil pack are located on an inner periphery of the magnetic ring, and the magnetic ring surrounds the plurality of winding coils.

6. The scanning apparatus of claim 5, wherein the restorer assembly is located on a side of the magnetic ring away from the coil pack.

7. The scanning apparatus of any one of claims 2-6, wherein the rotor comprises the magnetic ring, and the stator comprises the coil pack.

8. The scanning apparatus of claim 7, wherein the rotor is driven by a first action to rotate from the balance position to the predetermined position around the rotation shaft, wherein the first action is interaction between a current transmitted in the winding coils of the coil pack and a magnetic field of the magnetic ring.

9. The scanning apparatus of claim 7, wherein the restorer assembly comprises: at least one magnetic part; and
the rotor is driven at least by a second action to restore to the balance position around the rotation shaft, wherein the second action comprises interaction between a magnetic field of the magnetic part and the magnetic field of the magnetic ring.

10. The scanning apparatus of claim 9, wherein a magnet corresponding to the magnetic part and the magnetic part attract each other, to keep the magnetic ring at the balance position.

11. The scanning apparatus of claim 9, wherein when the rotor rotates to a predetermined position, a current transmitted in the winding coils of the coil pack is cut off, and the rotor is driven by the second action to restore to the balance position.

12. The scanning apparatus of claim 9, wherein when the rotor rotates to a predetermined position, a current transmitted in the winding coils of the coil pack is cut off, and a reverse current is inputted into the winding coils of the coil pack, the rotor is driven jointly by a first action and the second action to restore to the balance position.

13. The scanning apparatus of claim 9, wherein the restorer assembly further comprises: an exciting coil configured to regulate the magnetic field of the corresponding magnetic part, to cause the restorer assembly to form a predetermined effective magnetic field.

14. The scanning apparatus of claim 13, wherein the scanning apparatus further comprises:
a detector unit configured to detect the effective magnetic field of the restorer assembly; and
a regulator unit configured to control the exciting coil to regulate the magnetic field of the magnetic part based on a detection result of the detector unit, to cause the restorer assembly to form the predetermined effective magnetic field.

15. The scanning apparatus of claim 1, wherein the scanning apparatus further comprises: a counterweight piece located on a side of the rotor away from the scanning mirror, to cause an overall gravity center of the rotor, the scanning mirror, and the counterweight piece to be located at the position of the rotation shaft.

16. The scanning apparatus of claim 15, wherein the number of the scanning mirrors is one or more, and the one or more scanning mirrors are arranged opposite to the counterweight piece.

17. The scanning apparatus of claim 16, wherein the number of the scanning mirrors is two; and mirror surfaces of the two scanning mirrors form a predetermined angle.

18. A LiDAR, comprising:

a light emitter apparatus configured to generate detection light;
a scanning apparatus, wherein the scanning apparatus is the scanning apparatus of any of claims 1-17, and
the scanning apparatus reflects the detection light to a three-dimensional space and reflects echo light formed by a target in the three-dimensional space reflecting the detection light; and
a light receiver apparatus configured to detect the echo light.

19. A control method for a scanning apparatus for a LiDAR, wherein

the scanning apparatus comprises a resonant motor and a scanning mirror; wherein the resonant motor comprises a rotor and a stator; the rotor rotates from an balance position to a predetermined position around a rotation shaft; the stator comprises: a restorer assembly configured to restore the rotor to the balance position around the rotation shaft; the scanning mirror is configured to reflect a light beam, to perform optical scanning; the scanning mirror is connected to the resonant motor, to achieve reciprocating swing of the scanning mirror; the restorer assembly comprises: an exciting coil and a magnetic part, and the exciting coil surrounds a corresponding magnetic part; and
the control method comprises: regulating a magnetic field of the corresponding magnetic part by the exciting coil, to cause the restorer assembly to form a predetermined effective magnetic field.

20. The control method of claim 19, wherein before regulating the magnetic field of the corresponding magnetic part, the control method further comprises: detecting the effective magnetic field of the restorer assembly; and
controlling the exciting coil to regulate the magnetic field of the magnetic part based on a detection result of the detector unit when regulating the magnetic field of the corresponding magnetic part, to cause the restorer assembly to form the predetermined effective magnetic field.

21. The control method of claim 20, wherein in a power-on self-test process, the effective magnetic field of the restorer assembly is detected.

22. The control method of claim 20, wherein in a scanning process of the scanning apparatus the magnetic field of the magnetic part is detected in real time.

23. The control method of claim 20, wherein under a predetermined condition, the exciting coil is controlled to magnetize the magnetic part.

120

110

130

**FIG. 1**

**FIG. 2**

**FIG. 3**

EP 4 428 576 A1

FIG. 4

FIG. 5

19

220

210

230

215

Current unit

First controller — 251

Second controller — 252

Third controller — 253

Regulator unit — 250

Detector unit — 240

**FIG. 6**

**FIG. 7**

321

322

330

**FIG. 8**

411

412

413

**FIG. 9**

413

412

411

**FIG. 10**

| Detect effective magnetic field of restorer assembly | S11a |

| Control exciting coil to regulate magnetic field of magnetic part based on detection result of detector unit, to cause restorer assembly to form predetermined effective magnetic field | S11b |

**FIG. 11**

## INTERNATIONAL SEARCH REPORT

| | International application No. |
|---|---|
| | **PCT/CN2022/098330** |

**A. CLASSIFICATION OF SUBJECT MATTER**

G01S 17/08(2006.01)i; G01S 7/481(2006.01)i; G01S 7/48(2006.01)i

According to International Patent Classification (IPC) or to both national classification and IPC

**B. FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; IEEE: 激光, 雷达, 扫描, 谐振, 电机, 平衡, 回复, 镜, 反射, 光, 往复, 摆动, laser, radar, scan, resonance, motor, balance, reversion, lens, reflect, light, sway

**C. DOCUMENTS CONSIDERED TO BE RELEVANT**

| Category* | Citation of document, with indication, where appropriate, of the relevant passages | Relevant to claim No. |
|---|---|---|
| PX | CN 113885035 A (SHANGHAI HESAI TECHNOLOGY CO., LTD.) 04 January 2022 (2022-01-04)<br>description, paragraphs [0002]-[0166] | 1-23 |
| Y | CN 109782254 A (HESAI PHOTONICS TECHNOLOGY CO., LTD.) 21 May 2019 (2019-05-21)<br>description, paragraphs [0006]-[0026] | 1-23 |
| Y | CN 104604107 A (TBK K.K.) 06 May 2015 (2015-05-06)<br>description, paragraphs [0006]-[0019] | 1-23 |
| A | CN 1080753 A (OLYMPUS OPTICAL CO., LTD.) 12 January 1994 (1994-01-12)<br>entire document | 1-23 |
| A | US 2018252914 A1 (APPLE INC.) 06 September 2018 (2018-09-06)<br>entire document | 1-23 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 August 2022** | **22 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

24

**EP 4 428 576 A1**

<table>
<tr><th colspan="2">INTERNATIONAL SEARCH REPORT</th><th>International application No.</th></tr>
<tr><td colspan="2">Information on patent family members</td><td>**PCT/CN2022/098330**</td></tr>
</table>

| Patent document cited in search report | | | Publication date (day/month/year) | Patent family member(s) | | | Publication date (day/month/year) |
|---|---|---|---|---|---|---|---|
| CN | 113885035 | A | 04 January 2022 | CN | 216209896 | U | 05 April 2022 |
| CN | 109782254 | A | 21 May 2019 | WO | 2020156310 | A1 | 06 August 2020 |
| CN | 104604107 | A | 06 May 2015 | WO | 2015159385 | A1 | 22 October 2015 |
| | | | | KR | 20150134311 | A | 01 December 2015 |
| | | | | US | 2016137071 | A1 | 19 May 2016 |
| | | | | EP | 3139494 | A1 | 08 March 2017 |
| | | | | US | 9579982 | B2 | 28 February 2017 |
| | | | | EP | 3139494 | A4 | 20 December 2017 |
| | | | | JP | 6254940 | B2 | 27 December 2017 |
| | | | | KR | 101671975 | B1 | 03 November 2016 |
| CN | 1080753 | A | 12 January 1994 | JP | H0676094 | A | 18 March 1994 |
| | | | | TW | 283275 | B | 11 August 1996 |
| | | | | US | 5280163 | A | 18 January 1994 |
| | | | | CN | 1039459 | C | 05 August 1998 |
| | | | | JP | 2001076085 | A | 23 March 2001 |
| | | | | JP | 3485258 | B2 | 13 January 2004 |
| | | | | JP | 3487558 | B2 | 19 January 2004 |
| US | 2018252914 | A1 | 06 September 2018 | US | 10775612 | B2 | 15 September 2020 |

Form PCT/ISA/210 (patent family annex) (January 2015)

**REFERENCES CITED IN THE DESCRIPTION**

**Patent documents cited in the description**

- CN 202111302407